# EUROPEAN PATENT APPLICATION

(11) **EP 4 765 576 A1**
(43) Date of publication of application: **24.06.2026**
(21) Application number: 25219933.6
(22) Date of filing: 02.12.2025
(51) Int. Cl.: H02J 7/60

(54) **CHARGE/DISCHARGE CONTROL CIRCUIT, CHARGE/DISCHARGE CONTROL DEVICE, AND BATTERY DEVICE**

(30) Priority: 17.12.2024 JP 2024220826
(71) Applicant: ABLIC Inc., Kitasaku-gun, Nagano 389-0293 (JP)
(72) Inventor: FUKUCHI, Shinya, Kitasaku-gun, Nagano, 389-0293 (JP)
(74) Representative: Winter, Brandl - Partnerschaft mbB

(57) **Abstract**

A charge/discharge control circuit (30) includes: a UVLO detection circuit (31) connected to a positive power input terminal (C1) and detecting that voltage of the positive power input terminal (C1) is less than UVLO detection voltage; a load short circuit detection circuit (37) connected to an overcurrent detection terminal (C3) and detecting voltage of the overcurrent detection terminal (C3); a discharge control part (A2) performing control to turn off a discharge control FET (21) in response to a load short circuit detection signal output from the load short circuit detection circuit (37); a UVLO mask part (A3) masking a UVLO detection signal output from the UVLO detection circuit (31) by a load short circuit detection signal output from the load short circuit detection circuit (37); and an internal circuit on/off control circuit (34) controlling on/off of an internal circuit based on a signal output from the UVLO mask part (A3).

## Description

### BACKGROUND

### Technical Field

The disclosure relates to a charge/discharge control circuit, a charge/discharge control device, and a battery device.

### Description of Related Art

A charge/discharge control circuit which controls charge/discharge of a battery is known (for example, see Patent Document 1).

In the case of a load short circuit in a battery with multiple cells, the voltage between electrodes may drop extremely due to the internal resistance and current of the battery. In this case, before the charge/discharge control circuit detects the load short circuit, by detecting the voltage of the under voltage lock out (UVLO) function, the discharge control field effect transistor (FET) is turned off and discharge is stopped.

However, in such operation, in the case of turning on the discharge control FET by releasing the UVLO according to the recovery of the voltage between electrodes after the discharge stop, a short circuit current flows again. For this reason, a discharge stop and a discharge start are repeated, and the discharge control FET may be damaged.

As a solution to prevent this, in conventional circuits, the detection voltage of UVLO was designed around 2[V], and the minimum operating voltage of other circuits was set to 2[V] or below.

### Related Art

### Patent Documents

[Patent Document 1] Japanese Patent Application Laid-Open No. 2011-125165

### SUMMARY

### Technical Problem

However, in the conventional circuits as described above, since the minimum operating voltage is designed to be low, the circuit scale may become large.

Note that, for example, a countermeasure of providing a delay longer than the delay during short circuit current detection to the UVLO detection circuit is also conceivable, but even in that countermeasure, the circuit scale is considered to become large.

In other words, with the above countermeasure, the chip size becomes large.

The disclosure is made in consideration of such circumstances, and has an object to provide a charge/discharge control circuit, a charge/discharge control device, and a battery device that can suppress the circuit scale in the case of performing UVLO detection.

### Solution to the Problem

An aspect is a charge/discharge control circuit which includes: a positive power input terminal connected to a positive terminal of a battery; a negative power input terminal connected to a negative terminal of the battery; an overcurrent detection terminal connected to a side of the negative terminal of the battery; a UVLO detection circuit which is connected to the positive power input terminal and detects that voltage of the positive power input terminal is less than UVLO detection voltage; a load short circuit detection circuit which is connected to the overcurrent detection terminal and detects voltage of the overcurrent detection terminal; a discharge control part which performs control to turn off a discharge control FET according to a load short circuit detection signal output from the load short circuit detection circuit; a UVLO mask part which masks a UVLO detection signal output from the UVLO detection circuit by a load short circuit detection signal output from the load short circuit detection circuit; and an internal circuit on/off control circuit which controls on/off of an internal circuit based on a signal output from the UVLO mask part.

### Effects

According to the disclosure, in a charge/discharge control circuit, a charge/discharge control device, and a battery device, the circuit scale can be suppressed in the case of performing UVLO detection.

### BRIEF DESCRIPTION OF THE DRAWINGS

FIG. 1 is a diagram illustrating a configuration example of a charge/discharge control circuit, a charge/discharge control device, and a battery device according to an embodiment, and a first state of the battery device.
FIG. 2 is a diagram illustrating a second state of the battery device according to the embodiment.
FIG. 3 is a diagram illustrating a third state of the battery device according to the embodiment.
FIG. 4A to FIG. 4E are diagrams illustrating an example of a timing chart according to the embodiment.
FIG. 5 is a diagram illustrating a configuration example of a charge/discharge control circuit, a charge/discharge control device, and a battery device according to a comparative example, and a first state of the battery device.
FIG. 6 is a diagram illustrating a second state of the battery device according to the comparative example.
FIG. 7 is a diagram illustrating a third state of the battery device according to the comparative example.
FIG. 8A to FIG. 8E are diagrams illustrating an example of a timing chart according to the comparative example.

### DESCRIPTION OF THE EMBODIMENTS

Hereinafter, embodiments of the disclosure will be described with reference to the drawings.

### [Battery Device]

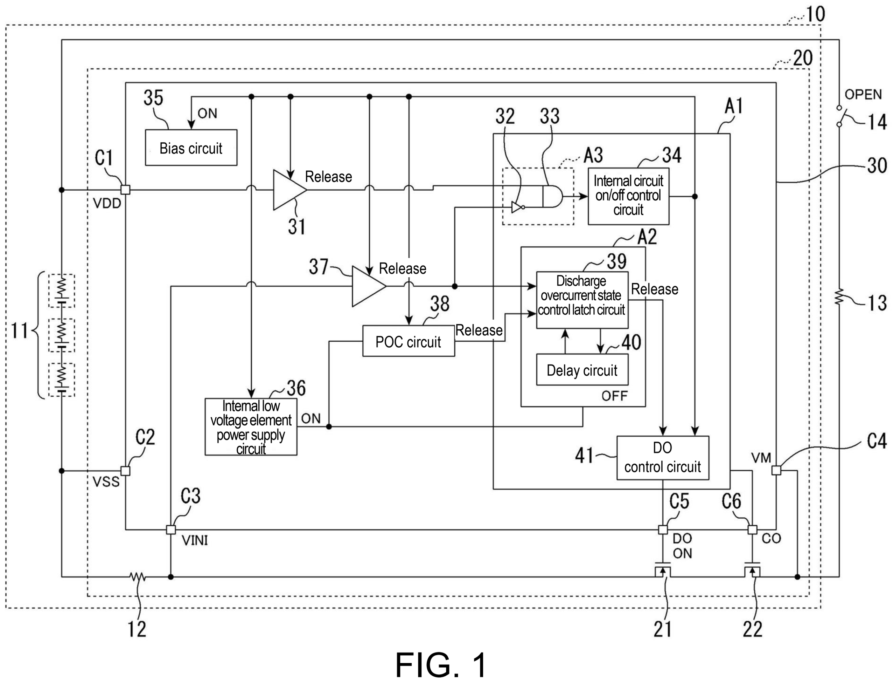

FIG. 1 is a diagram illustrating a configuration example of a charge/discharge control circuit 30, a charge/discharge control device 20, and a battery device 10 according to an embodiment, and a first state of the battery device 10.

The battery device 10 includes a charge/discharge control device 20 and a battery 11.

The charge/discharge control device 20 includes a charge/discharge control circuit 30, a discharge control FET 21, and a charge control FET 22.

Also, FIG. 1 illustrates overcurrent detection sense resistance 12, a short circuit load 13, and a switch 14.

The charge/discharge control device 20 controls charge/discharge of the battery 11. The discharge control FET 21 performs discharge control.

The charge control FET 22 performs charge control.

The charge/discharge control circuit 30 includes a charge/discharge control part A1, a UVLO detection circuit 31 containing an under voltage lock out function, a bias circuit 35, an internal low voltage element power supply circuit 36, a load short circuit detection circuit 37, and a power on clear (POC) circuit 38.

The charge/discharge control part A1 includes a discharge control part A2, a UVLO mask part A3, an internal circuit on/off control circuit 34, and a DO control circuit 41.

The discharge control part A2 includes a discharge overcurrent state control latch circuit 39 and a delay circuit 40.

The UVLO mask part A3 includes an inverter 32 and an AND circuit 33.

The charge/discharge control circuit 30 includes a positive power input terminal C1 which is a terminal for voltage VDD, a negative power input terminal C2 which is a terminal for voltage VSS, an overcurrent detection terminal C3 which is a terminal for voltage VINI, an external voltage input terminal C4 which is a terminal for voltage VM, a discharge control FET gate connection terminal C5 which is a terminal for a discharge control function (DO), and a charge control FET gate connection terminal C6 which is a terminal for a charge control function (CO).

### <Circuit Connection Relationship, etc.>

Between the positive terminal and the negative terminal of the battery 11, the switch 14, the short circuit load 13, the charge control FET 22, the discharge control FET 21, and the overcurrent detection sense resistance 12 are connected in order from the positive terminal toward the negative terminal.

Here, the source (S) of the charge control FET 22 is connected to the short circuit load 13, the drain (D) of the charge control FET 22 and the drain (D) of the discharge control FET 21 are connected, and the source (S) of the discharge control FET 21 is connected to the overcurrent detection sense resistance 12.

The positive power input terminal C1 is connected to the positive terminal of the battery 11.

The negative power input terminal C2 is connected to the negative terminal of the battery 11.

The overcurrent detection terminal C3 is connected to a side of the negative terminal of the battery 11, and is connected to a point between the discharge control FET 21 and the overcurrent detection sense resistance 12.

The external voltage input terminal C4 is connected to the source (S) of the charge control FET 22.

The discharge control FET gate connection terminal C5 is connected to the gate (G) of the discharge control FET 21.

The charge control FET gate connection terminal C6 is connected to the gate (G) of the charge control FET 22.

The input port of the UVLO detection circuit 31 is connected to the positive power input terminal C1.

The output port of the UVLO detection circuit 31 is connected to one input port of the AND circuit 33.

The UVLO detection circuit 31 detects that the voltage VDD of the positive power input terminal C1 is less than the UVLO detection voltage.

The input port of the load short circuit detection circuit 37 is connected to the overcurrent detection terminal C3.

The output port of the load short circuit detection circuit 37 is connected to the input port of the inverter 32 and one input port of the discharge overcurrent state control latch circuit 39, respectively.

The load short circuit detection circuit 37 detects the voltage VINI of the overcurrent detection terminal C3.

The output port of the AND circuit 33 is connected to the input port of the internal circuit on/off control circuit 34.

The inverter 32 inverts a load short circuit detection signal output from the load short circuit detection circuit 37.

The AND circuit 33 receives a UVLO detection signal output from the UVLO detection circuit 31 and a signal output from the inverter 32, and outputs a signal according to the receipt.

With such a configuration, the UVLO mask part A3 masks (that is, invalidates) the UVLO detection signal output from the UVLO detection circuit 31 by the load short circuit detection signal output from the load short circuit detection circuit 37.

Such a configuration using the AND circuit 33 and the inverter 32 is an example of a simple circuit configuration which realizes masking.

The output port of the internal low voltage element power supply circuit 36 is connected to the input port of the POC circuit 38 and the input port of the discharge control part A2, respectively.

The discharge control part A2 performs control to turn off the discharge control FET 21 in response to the load short circuit detection signal output from the load short circuit detection circuit 37.

The output port of the POC circuit 38 is connected to the other input port of the discharge overcurrent state control latch circuit 39.

The discharge overcurrent state control latch circuit 39 is connected to the input port and the output port of the delay circuit 40, respectively.

The output port of the discharge overcurrent state control latch circuit 39 is connected to one input port of the DO control circuit 41.

The control output port of the internal circuit on/off control circuit 34 is connected to the other input port of the DO control circuit 41.

The internal circuit on/off control circuit 34 controls on/off of the internal circuit based on the signal output from the UVLO mask part A3.

The output port of the DO control circuit 41 is connected to the discharge control FET gate connection terminal C5.

The output port of the charge/discharge control part A1 is connected to the charge control FET gate connection terminal C6.

The internal circuit on/off control circuit 34 controls the UVLO detection circuit 31, the bias circuit 35, the internal low voltage element power supply circuit 36, the load short circuit detection circuit 37, and the POC circuit 38.

In the embodiment, since discharge control is mainly described, illustration and description of details of charge control are omitted.

Also, in the embodiment, description of details of the bias circuit 35 is omitted.

### [Example of Operation of Battery Device]

An example of operation in the case of masking UVLO detection by a load short circuit detection signal during a load short circuit is illustrated with reference to FIG. 1 to FIG. 4E.

### <First State>

FIG. 1 illustrates a first state of the battery device 10.

The switch 14 is controlled to an open (OPEN) state.

The voltage VDD is higher than the UVLO detection voltage VUVLO.

The UVLO detection circuit 31 is in a release state.

The bias circuit 35 is in an on state.

The internal low voltage element power supply circuit 36 is in an on state.

The load short circuit detection circuit 37 is in a release state.

The POC circuit 38 is in a release state.

The output port of the discharge overcurrent state control latch circuit 39 is in a release state.

The delay circuit 40 is in an off state.

The discharge control FET 21 is in an on state.

### <Second State>

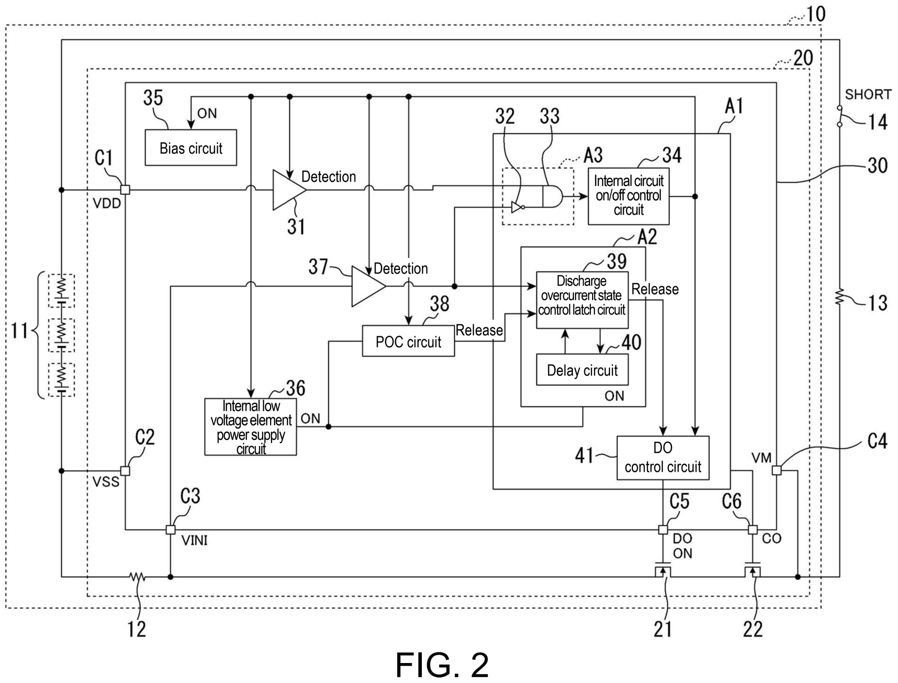

FIG. 2 is a diagram illustrating a second state of the battery device 10 according to the embodiment.

In contrast to the first state, the switch 14 is controlled to a closed (SHORT) state.

As a result, the short circuit load 13 is connected to both ends of the battery 11. Then, a current flows through the battery 11. Due to the current from the short circuit load 13 and the internal resistance of the battery 11, the voltage VDD drops and becomes lower than the UVLO detection voltage VUVLO.

The UVLO detection circuit 31 is in a detection state and outputs a UVLO detection signal.

The load short circuit detection circuit 37 is in a detection state and outputs a load short circuit detection signal.

In the example, the detection by the UVLO detection circuit 31 and the detection by the load short circuit detection circuit 37 are performed simultaneously (or substantially simultaneously).

The UVLO mask part A3 masks the UVLO detection signal with the load short circuit detection signal. Thus, the internal circuit on/off control circuit 34 does not turn off the internal circuit.

Since the internal circuit is not turned off, in the discharge control part A2, load short circuit detection is started, and the delay circuit 40 is controlled to an on state.

The discharge overcurrent state control latch circuit 39 starts delaying the load short circuit detection signal with the delay circuit 40.

### <Third State>

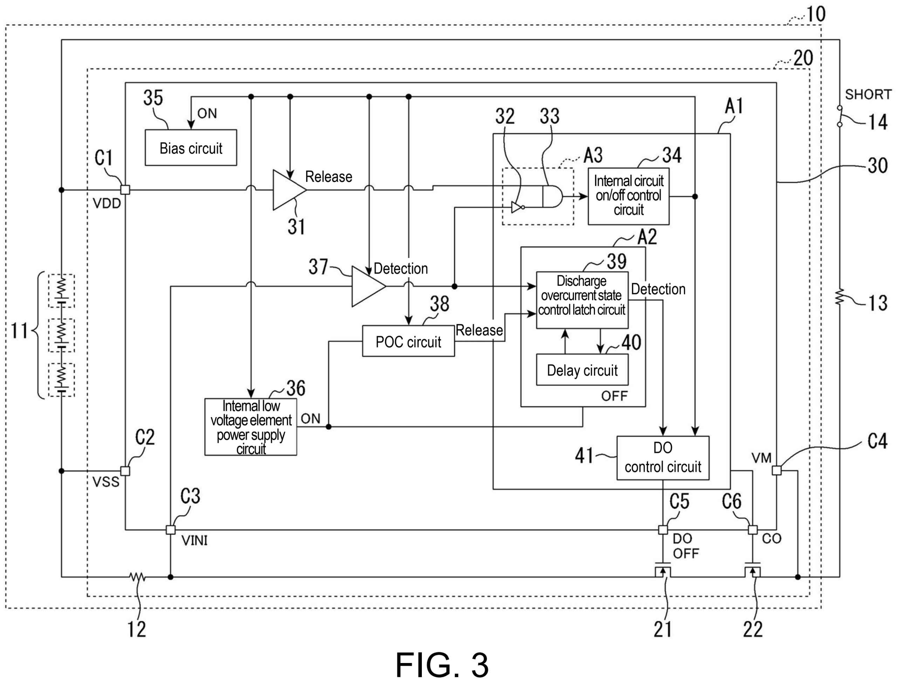

FIG. 3 is a diagram illustrating a third state of the battery device 10 according to the embodiment.

After the second state, the voltage VDD becomes higher than the UVLO detection voltage VUVLO.

The UVLO detection circuit 31 is in a release state.

The output port of the discharge overcurrent state control latch circuit 39 is in a detection state and outputs a load short circuit detection signal.

The delay circuit 40 is in an off state.

The discharge control FET 21 is controlled to an off state by the load short circuit detection signal from the discharge overcurrent state control latch circuit 39.

In this manner, in the third state, the discharge control FET 21 is controlled to be off and discharge is stopped due to completion of the delay of the delay circuit 40.

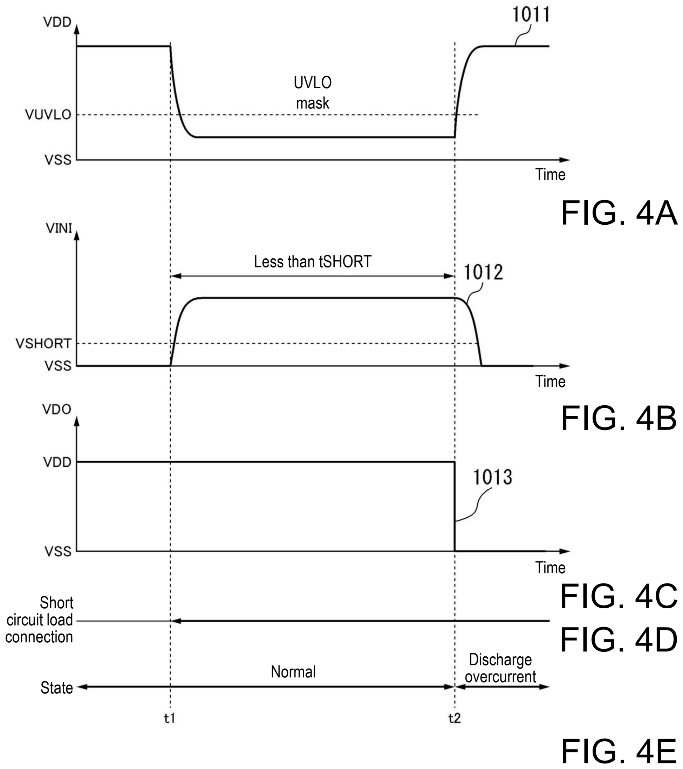

FIG. 4A to FIG. 4E are diagrams illustrating an example of a timing chart according to the embodiment.

FIG. 4A to FIG. 4E illustrate three graphs.

The lateral axis of the three graphs represents time and is a common time. Time t1 and time t2 are illustrated.

Also, the longitudinal axis of each of the three graphs represents voltage.

The graph of FIG. 4A illustrates a characteristic 1011 of the voltage VDD of the positive power input terminal C1.

In the graph, the longitudinal axis illustrates the UVLO detection voltage VUVLO, which is a threshold value, and the voltage VSS.

Also, the graph schematically illustrates a period of a UVLO mask.

The graph of FIG. 4B illustrates a characteristic 1012 of the voltage VINI of the overcurrent detection terminal C3.

In the graph, the longitudinal axis illustrates load short circuit detection voltage VSHORT and the voltage VSS.

Also, the graph schematically illustrates a section less than load short circuit detection delay time tSHORT.

The graph of FIG. 4C illustrates a characteristic 1013 of voltage (voltage VDO) of the discharge control FET gate connection terminal C5.

In the graph, the longitudinal axis illustrates the voltage VDD and the voltage VSS.

FIG. 4D illustrates the presence or absence of a short circuit load connection. In the example, the short circuit load 13 is connected after time t1.

FIG. 4E illustrates whether the state is in a normal state or a discharge overcurrent state. In the example, the state is in the normal state until time t2, and in the discharge overcurrent state after time t2.

### [Regarding the Embodiment]

As described above, in the charge/discharge control circuit 30, the charge/discharge control device 20, and the battery device 10 according to the embodiment, UVLO detection is performed, and during load short circuit detection, turning off of internal circuits by UVLO is masked.

Thus, in the charge/discharge control circuit 30, the charge/discharge control device 20, and the battery device 10 according to the embodiment, in the case of performing UVLO detection, the circuit scale can be suppressed. That is, the circuit scale can be reduced compared to conventional circuits.

In the embodiment, it is not needed to lower the minimum operating voltage of the entire circuit, and the design difficulty of the circuit is reduced. For example, the minimum operating voltage may also be set to about 3[V].

### [Description of Comparative Example]

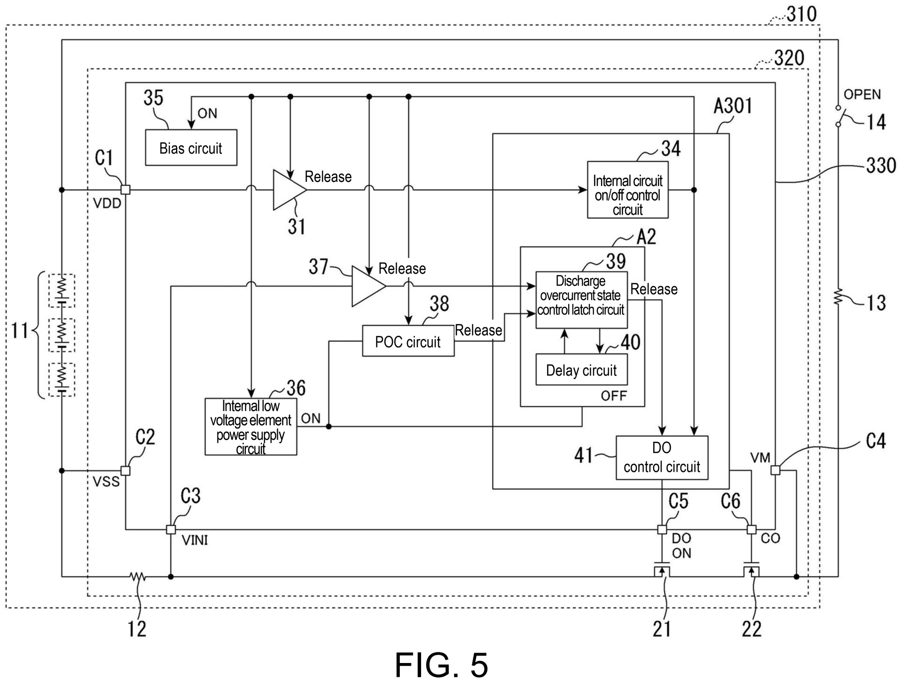

A comparative example will be described with reference to FIG.5 to FIG.8. An example of operation in the case of UVLO detection during a load short circuit is illustrated with reference to FIG.5 to FIG.8.

For convenience of description, in FIG.5 to FIG.7, the same reference numerals are assigned to the same component parts as in FIG.1 to FIG.3.

FIG.5 is a diagram illustrating a configuration example of a charge/discharge control circuit 330, a charge/discharge control device 320, and a battery device 310 according to a comparative example, and a first state of the battery device 310.

The configuration and operation of the battery device 310 according to the comparative example differs from the battery device 10 according to the embodiment in that the battery device 310 does not include the UVLO mask part A3 illustrated in FIG.1 to FIG.3.

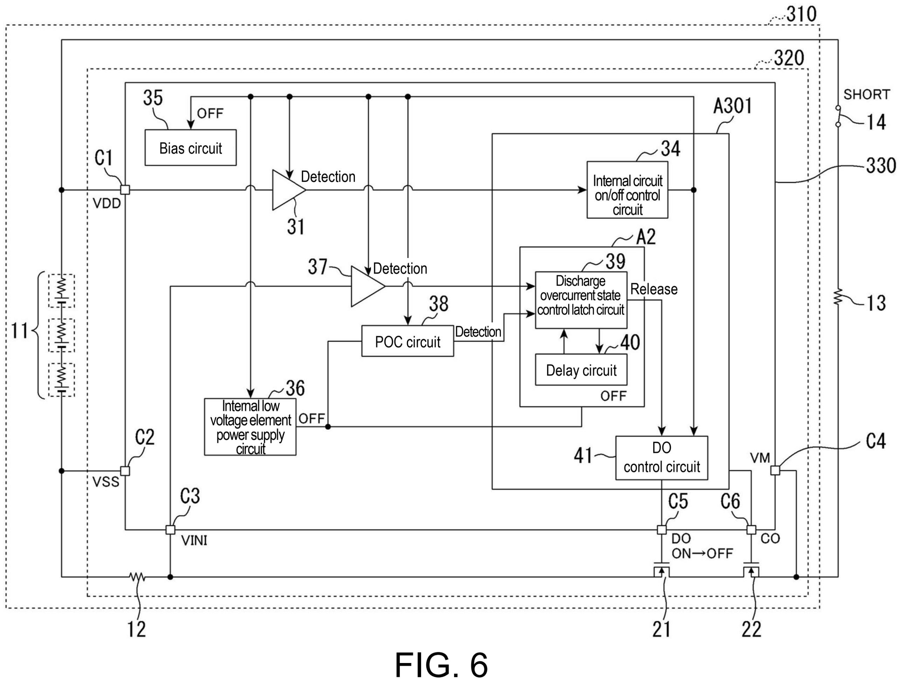

FIG.6 is a diagram illustrating a second state of the battery device 310 according to the comparative example.

The switch 14 is controlled to a closed (SHORT) state.

As a result, the short circuit load 13 is connected to both ends of the battery 11. Then, a current flows through the battery 11. Due to the current from the short circuit load 13 and the internal resistance of the battery 11, the voltage VDD drops and becomes lower than the UVLO detection voltage VUVLO.

The UVLO detection circuit 31 is in a detection state and outputs a UVLO detection signal.

The internal circuit on/off control circuit 34 turns off the internal circuits (the bias circuit 35 and the internal low voltage element power supply circuit 36).

The load short circuit detection circuit 37 is in a detection state and outputs a load short circuit detection signal.

The POC circuit 38 is in a detection state and outputs a POC detection signal.

Due to UVLO detection by the internal circuit on/off control circuit 34, the discharge control FET 21 is controlled to be off, and discharge stops.

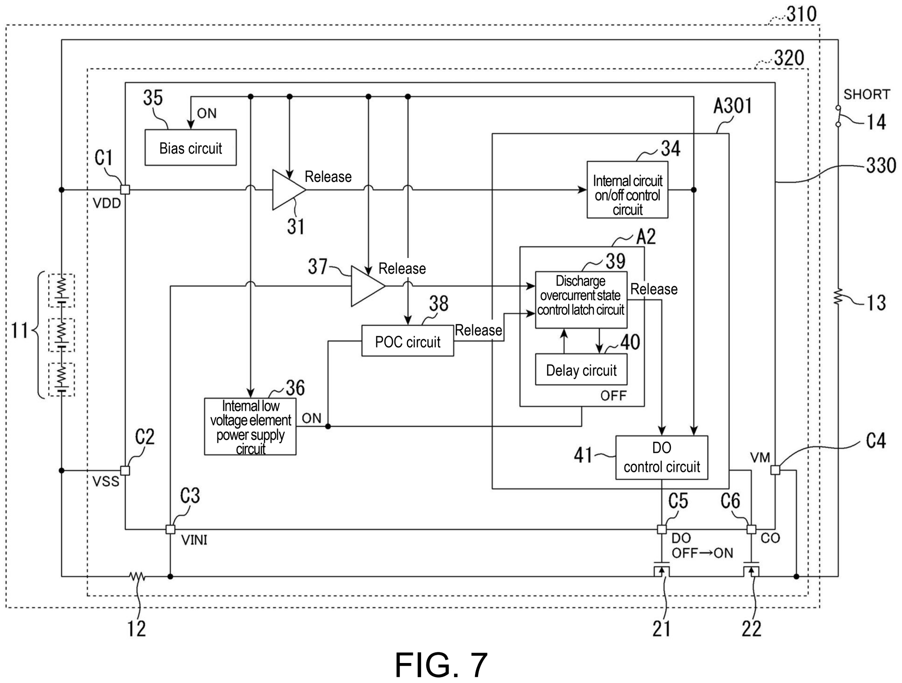

FIG. 7 is a diagram illustrating a third state of the battery device 310 according to the comparative example.

The voltage VDD becomes higher than the UVLO detection voltage VUVLO.

The UVLO detection circuit 31 is in a release state.

The internal circuit on/off control circuit 34 turns on the internal circuits (the bias circuit 35 and the internal low voltage element power supply circuit 36).

The load short circuit detection circuit 37 becomes in a release state.

The POC circuit 38 becomes in a release state.

Due to the recovery of the voltage VDD, the discharge control FET 21 is controlled to be on, and discharge starts.

Here, in the comparative example, after the third state, the discharge control FET 21 is controlled to be off again due to the current from the short circuit load 13, that is, the second state is entered. And in the comparative example, the second state and the third state are repeated.

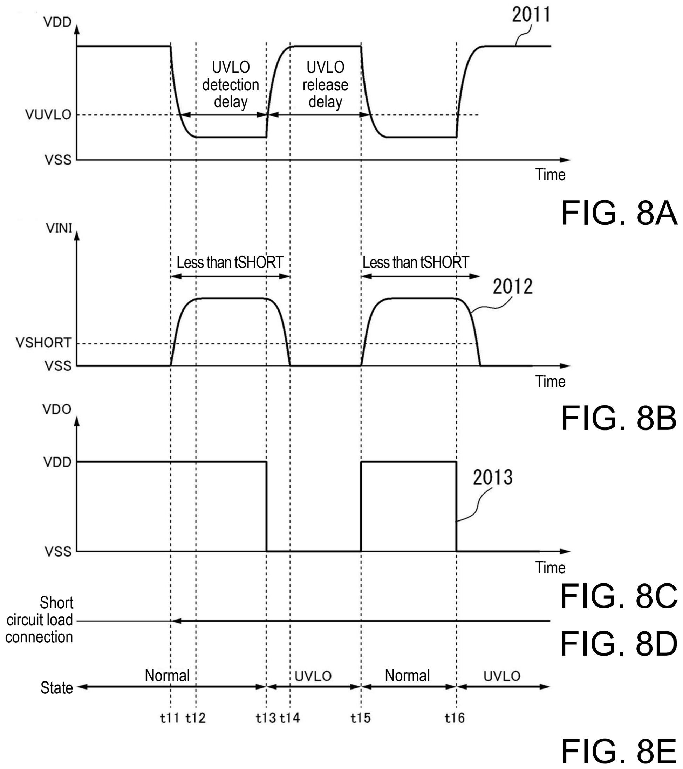

FIG. 8A to FIG. 8E are diagrams illustrating an example of a timing chart according to the comparative example.

FIG. 8A to FIG. 8E illustrate three graphs.

The lateral axis of the three graphs represents time and is a common time. Time t11 to time t16 are illustrated.

Also, the longitudinal axis of each of the three graphs represents voltage.

The graph of FIG. 8A illustrates a characteristic 2011 of the voltage VDD of the positive power input terminal C1.

In the graph, the longitudinal axis illustrates the UVLO detection voltage VUVLO, which is a threshold value, and the voltage VSS.

Also, the graph schematically illustrates periods of a UVLO detection delay and a UVLO release delay.

The graph of FIG. 8B illustrates a characteristic 2012 of the voltage VINI of the overcurrent detection terminal C3. The graph illustrates load short circuit detection voltage VSHORT and load short circuit detection delay time tSHORT.

In the graph, the longitudinal axis illustrates the load short circuit detection voltage VSHORT and the voltage VSS.

Also, the graph schematically illustrates a section less than the load short circuit detection delay time tSHORT.

The graph of FIG. 8C illustrates a characteristic 2013 of voltage (voltage VDO) of the discharge control FET gate connection terminal C5.

In the graph, the longitudinal axis illustrates the voltage VDD and the voltage VSS.

FIG. 8D illustrates the presence or absence of a short circuit load connection. In the example, the short circuit load 13 is connected after time t11.

FIG. 8E illustrates whether the state is in a normal state or a UVLO state. In the example, the state is in the normal state until time t13, followed by the UVLO state until time t15, followed by the normal state until time t16, and then becomes the UVLO state again.

In this manner, in the comparative example, the normal state and the UVLO state are repeated, but in the embodiment, such a problem can be resolved.

As described above, the embodiment of the disclosure has been described in detail with reference to the drawings, but the specific configuration is not limited to the embodiment, and includes designs, etc., within the scope that do not depart from the essence of the disclosure. For example, the discharge control FET 21, the charge control FET 22, the overcurrent detection sense resistance 12, the overcurrent detection terminal C3, the external voltage input terminal C4, the discharge control FET gate connection terminal C5, and the charge control FET gate connection terminal C6 are configured to be disposed on the low side (negative side of the battery), but are not limited thereto, and may also be configured to be disposed on the high side (positive side of the battery).

### Description of Reference Numerals

10...battery device, 20...charge/discharge control device, 30...charge/discharge control circuit, 11...battery, 12...overcurrent detection sense resistance, 13...short circuit load, 14...switch, 21...discharge control FET, 22...charge control FET, 31...UVLO detection circuit, 32...inverter, 33...AND circuit, 34...internal circuit on/off control circuit, 35...bias circuit, 36...internal low voltage element power supply circuit, 37...load short circuit detection circuit, 38...POC circuit, 39...discharge overcurrent state control latch circuit, 40...delay circuit, 41...DO control circuit, A1...charge/discharge control part, A2...discharge control part, A3...UVLO mask part, C1...positive power input terminal, C2...negative power input terminal, C3...overcurrent detection terminal, C4...external voltage input terminal, C5...discharge control FET gate connection terminal, C6...charge control FET gate connection terminal

## Claims

1. A charge/discharge control circuit (30), comprising:
a positive power input terminal (C1), connected to a positive terminal of a battery (11);
a negative power input terminal (C2), connected to a negative terminal of the battery (11);
an overcurrent detection terminal (C3), connected to a side of the negative terminal of the battery (11);
a UVLO detection circuit (31), connected to the positive power input terminal (C1) and detecting that voltage of the positive power input terminal (C1) is less than UVLO detection voltage;
a load short circuit detection circuit (37), connected to the overcurrent detection terminal (C3) and detecting voltage of the overcurrent detection terminal (C3);
a discharge control part (A2), performing control to turn off a discharge control FET (21) in response to a load short circuit detection signal output from the load short circuit detection circuit (37);
a UVLO mask part (A3), masking a UVLO detection signal output from the UVLO detection circuit (31) by a load short circuit detection signal output from the load short circuit detection circuit (37); and
an internal circuit on/off control circuit (34), controlling on/off of an internal circuit based on a signal output from the UVLO mask part (A3).

2. The charge/discharge control circuit (30) according to claim 1, wherein
the UVLO mask part (A3) comprises
an inverter (32) which inverts a load short circuit detection signal output from the load short circuit detection circuit(37), and
an AND circuit (33) which receives a UVLO detection signal output from the UVLO detection circuit (31) and a signal output from the inverter (32), and outputs a signal according to the receipt.

3. A charge/discharge control device (20), comprising:
the discharge control FET (21), performing discharge control;
a charge control FET (22), performing charge control; and
the charge/discharge control circuit (20) according to claim 1 or claim 2.

4. A battery device (10), comprising:
a battery (11); and
the charge/discharge control device (20) according to claim 3, controlling charge/discharge of the battery (11).
